(19) Europäisches Patentamt
European Patent Office
Office européen des brevets

(11) EP 0 749 024 A2

(12) **DEMANDE DE BREVET EUROPEEN**

(43) Date de publication:
**18.12.1996 Bulletin 1996/51**

(51) Int Cl.6: **G02B 6/18**, G02B 6/22

(21) Numéro de dépôt: **96202062.4**

(22) Date de dépôt: **25.08.1995**

(84) Etats contractants désignés:
**DE DK FR GB IT NL**

(30) Priorité: **05.09.1994 FR 9410615**

(62) Numéro de dépôt de la demande initiale en application de l'article 76 CBE: **95929137.8**

(71) Demandeur: **ALCATEL FIBRES OPTIQUES**
**F-95871 Bezons Cedex (FR)**

(72) Inventeurs:
- **Nouchi, Pascale**
**91140 Villebon-sur-Yvette (FR)**
- **Sansonetti, Pierre**
**91120 Palaiseau (FR)**
- **Audouin, Olivier**
**91600 Savigny-sur-Orge (FR)**
- **Hamaide, Jean-Pierre**
**91180 Saint-Germain-les-Arpajon (FR)**

(74) Mandataire: **Feray, Valérie et al**
**c/o ALCATEL ALSTHOM,**
**Département de Propriété Industrielle,**
**30, avenue Kléber**
**75116 Paris (FR)**

Remarques:
Cette demande a été déposée le 08 - 05 - 1996 comme demande divisionnaire de la demande mentionnée sous le code INID 62.

(54) **Fibre optique monomode à dispersion décalée**

(57) La présente invention concerne des fibres optiques monomodes à dispersion décalée dont la surface effective de mode est supérieure à 65 μm$^2$ par optimisation des paramètres géométriques caractéristiques de ces fibres.

FIG.1

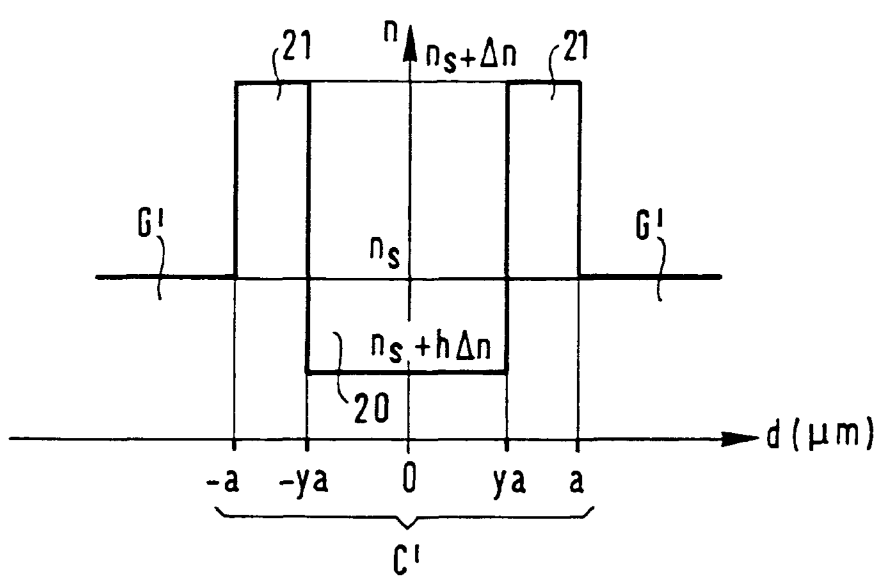


EP 0 749 024 A2

## Description

La présente invention concerne une fibre optique monomode à dispersion décalée.

Les fibres optiques monomodes dites à dispersion décalée sont telles qu'à la longueur d'onde de transmission à laquelle elles sont utilisées, qui est en général différente de 1,3 μm (longueur d'onde à laquelle la dispersion de la silice est sensiblement nulle), la dispersion chromatique de l'onde transmise est sensiblement nulle, c'est-à-dire que la dispersion chromatique de la silice, non nulle, est compensée (d'où l'emploi du terme "décalée") notamment par une augmentation de l'écart d'indice $\Delta$ n entre le coeur et la gaine optique.

La longueur d'onde de transmission choisie à l'heure actuelle pour les fibres de ligne, c'est-à-dire les fibres destinées à assurer les transmissions à longue distance, par exemple dans le cadre des liaisons transocéaniques, est sensiblement égale à 1,55 μm. En effet, c'est à cette longueur d'onde qu'il est possible d'obtenir une atténuation minimale de transmission de la lumière, de l'ordre de 0,2 dB/km.

Ainsi, dans le cadre de la présente invention, les fibres considérées sont destinées à être utilisées à une longueur d'onde de 1,55 μm, la plus efficace pour la transmission.

Par ailleurs, on sait bien que les fibres optiques monomodes ont une largeur de bande bien plus grande que les fibres multimodes, et c'est pourquoi les développements actuels et futurs de lignes de transmission à longue distance sont axés sur les fibres optiques monomodes.

En conséquence, la présente invention s'attache tout particulièrement aux fibres optiques monomodes à dispersion décalée destinées à être utilisées à une longueur d'onde sensiblement égale à 1,55 μm.

Plus précisément, l'invention se rapporte à de telles fibres optiques pour lesquelles les pertes par courbure ne dépassent pas 0,005 dB/m lorsque le rayon de courbure est de 30 mm. En effet, il est bien connu qu'une telle limitation des pertes par courbure est nécessaire pour assurer un fonctionnement dans des conditions de transmission correctes pour la fibre optique.

A l'heure actuelle, de nombreux profils de fibres optiques monomodes à dispersion décalée sont étudiés et amplement décrits dans la littérature.

Les profils les plus simples connus, dits en "échelon", "trapèze" ou "triangle", sont tels que l'indice de réfraction au niveau du coeur varie en fonction de la distance à l'axe de la fibre, de sorte que sa représentation en fonction de cette distance conduit à une courbe formant respectivement un rectangle, un trapèze ou un triangle, l'indice au niveau de la gaine optique entourant le coeur étant constant et inférieur à celui du coeur.

On connaît aussi un profil dit à "piédestal", dans lequel la partie centrale formant le coeur "intérieur" de la fibre optique est entourée successivement d'un coeur "extérieur" d'indice de réfraction inférieur à celui du coeur intérieur, puis d'une gaine optique d'indice inférieur à celui du coeur extérieur.

On connaît également, ainsi que décrit dans l'article intitulé "Transmission characteristics of a coaxial optical fiber line", publié dans Journal of Lightwave Technology, Vol. 11, N°11, Novembre 1993, un profil du type dit à "creux central enterré", représenté très schématiquement en figure 1, où l'on voit la courbe donnant l'indice de réfraction n dans la fibre optique en fonction de la distance d à l'axe de la fibre. Dans ce profil, le coeur C' comprend une partie centrale 20 d'indice minimal $n_s+h\Delta n$ (h<0) entourée d'un couche 21 d'indice $n_s+\Delta n$ supérieur à $n_s+h\Delta n$. La couche 21 est entourée d'une couche de gaine G' d'indice égal à $n_s$.

On rappelle que, bien évidemment, tous les profils qui viennent d'être évoqués ont une symétrie de révolution autour de l'axe de la fibre optique.

Tous ces profils permettent d'obtenir une dispersion chromatique sensiblement nulle à 1,55 μm ainsi que des pertes par atténuation et courbure faibles. Toutefois, un souci constant dans le cadre du développement des liaisons longue distance utilisant des fibres optiques est d'améliorer encore la qualité de la transmission et d'en diminuer le coût.

Or la qualité de la transmission est liée au rapport signal à bruit le long de la liaison, le bruit provenant de l'émission spontanée amplifiée générée par les amplificateurs appartenant aux répéteurs utilisés au sein de la ligne de transmission, et l'on a montré que ce rapport signal à bruit est lui-même inversement proportionnel à une fonction F dite de pénalité de la fibre, qui dépend de la distance entre amplificateurs Z, de la surface effective de mode $S_{eff}$ de la fibre optique utilisée, du facteur d'inversion de population $n_{sp}$, de l'atténuation linéique $\alpha$ et des coefficients de couplage $C_1$ et $C_2$ respectivement en entrée et en sortie de l'amplificateur. La fonction de pénalité F est ainsi donnée par la formule :

$$F = \frac{n_{sp}\alpha}{S_{eff}}\left(\frac{e^{\alpha Z}}{C_1C_2} - 1\right)\frac{C_2}{(\alpha Z)^2}\left(\frac{e^{\alpha Z} - 1}{e^{\alpha Z}}\right).$$

On comprend d'après cette formule que, pour améliorer la qualité de la transmission, on peut chercher:

- à réduire le facteur d'inversion de population $n_{sp}$, toutes choses égales par ailleurs ; ceci demande cependant des

mises au point complexes au niveau de la longueur d'onde de pompage et donc au niveau des composants de la ligne autres que la fibre optique,

- à réduire l'atténuation $\alpha$ ; toutefois, cette dernière étant déjà très faible à 1,55 µm (voisine en pratique de 0.2 dB/km), l'influence de la réduction que l'on peut escompter n'est pas notable sur la fonction de pénalité F,
- à influer sur les coefficients de couplage $C_1$ et $C_2$ ; ceci fait également intervenir les composants de la ligne autres que la fibre optique et demande donc des mises au point complexes,
- à augmenter la surface effective de mode $S_{eff}$ ; ceci permet effectivement d'augmenter la qualité de la liaison.

On a représenté en figure 2 la fonction de pénalité F en dB d'une fibre optique utilisant la transmission de type Soliton en fonction de la distance entre amplificateurs Z en km pour une fibre optique connue de surface effective de mode égale à 50 $\mu m^2$ (courbe 30), et pour une fibre optique théorique de surface effective de mode égale à 70 $\mu m^2$ (courbe 31), tous les autres paramètres dont dépend F étant donnés et égaux par ailleurs. On constate que, à fonction de pénalité donnée, c'est-à-dire rapport signal à bruit donné, plus la surface effective de mode est élevée, plus la distance entre amplificateurs est élevée, ce qui permet de diminuer le nombre de répéteurs utilisés et donc le coût du système.

De même, on constate qu'à distance entre amplificateurs donnée, plus la surface effective de mode est élevée, plus la fonction de pénalité est faible, c'est-à-dire meilleure est la qualité de transmission.

Ainsi, pour améliorer la qualité de la transmission, ou bien encore, de manière équivalente, diminuer le nombre de répéteurs utilisés à qualité de la liaison donnée, ce qui permet de réduire le coût de la liaison, il est intéressant d'accroître la surface effective de mode.

Avec les profils d'indice simples, tels que les profils en échelon, trapèze ou triangle, pour obtenir une dispersion chromatique sensiblement nulle à 1,55 µm, c'est-à-dire pour compenser la dispersion chromatique de la silice à 1,55 µm, il est nécessaire d'augmenter la différence d'indice entre le coeur et la gaine, ce qui entraîne nécessairement une diminution de la surface effective de mode.

Ainsi, pour obtenir de fortes surfaces effectives de mode tout en assurant une dispersion chromatique sensiblement nulle à 1,55 µm, il est nécessaire de choisir des profils d'indice plus complexes tels que le profil représenté à la figure 1.

Jusqu'à présent, aucune étude n'a été menée sur le profil à creux central enterré permettant de déterminer une surface effective de mode.

Le but de la présente invention est donc d'optimiser les paramètres géométriques du profil à creux central enterré, qui permet d'obtenir des surfaces effectives de mode supérieures à celles obtenues avec les profils classiques, afin de réaliser des fibres optiques monomodes à dispersion chromatique nulle au voisinage de 1,55 µm et à surface effective de mode supérieure à 65 $\mu m^2$, tout en maintenant une atténuation et des pertes par courbure équivalentes à celles obtenues avec les fibres optiques connues.

La présente invention propose, pour résoudre le problème posé, une fibre optique monomode à dispersion chromatique sensiblement nulle au voisinage de 1,55 µm, comprenant un coeur optique comportant :

- une partie centrale d'indice variable avec la distance à l'axe de ladite fibre optique entre un indice minimal $n_s+h\Delta n$, avec $-1 < h < 0$ et $\Delta n$ strictement positif, et un indice maximal $n_s$.
- une couche entourant ladite partie centrale, d'indice variable avec la distance à l'axe de ladite fibre entre $n_s$ et $n_s+\Delta n$,

et une gaine optique entourant ladite couche et ayant un indice sensiblement égal à $n_s$, ledit profil étant défini par les paramètres géométriques suivants :

- a : rayon total du coeur mesuré au niveau de ladite couche,
- y : rapport entre le rayon de ladite partie centrale et a, avec $0 < y < 1$, ladite fibre étant caractérisée en ce que a et $\Delta n$ sont déterminés de sorte que la dispersion chromatique de ladite fibre est sensiblement nulle à 1,55 µm et la longueur d'onde de coupure $\lambda_c$ de ladite fibre soit telle que : $1{,}4\ \mu m < \lambda_c < 1{,}55\ \mu m$, y est choisi quelconque entre 0 et 1 et h est choisi de manière à vérifier les relations suivantes :

1°) $h_1(y) \le h \le h_2(y)$ avec :

$$\begin{cases} h_1(y) = -6{,}56 + 14{,}96y - 8{,}71y^2 \text{ et,} \\ h_2(y) = -6{,}2 + 16{,}76y - 11{,}61y^2 \end{cases}$$

2°) $-2{,}33y+0{,}6 < h < -0{,}2$.

Avec la fibre optique à profil de type creux central enterré selon l'invention, on obtient des surfaces effectives de mode supérieures à 65 $\mu m^2$, et allant jusqu'à 95 $\mu m^2$. Ceci permet également, à qualité de la liaison donnée, d'accroître la distance entre amplificateurs de 10 à 40%.

D'autres caractéristiques et avantages de la présente invention apparaîtront dans la description suivante de modes de mise en oeuvre de la présente invention, donnés à titre illustratif et nullement limitatif.

Dans les figures suivantes :

- la figure 1 montre en fonction de la distance d à l'axe de la fibre optique les variations de l'indice de réfraction n des différentes couches pour une fibre monomode à profil du type à creux central enterré,
- la figure 2 montre, en fonction de la distance Z entre amplificateurs, la fonction de pénalité F d'une fibre optique monomode à dispersion chromatique sensiblement nulle à 1.55 µm utilisant la transmission de type Soliton.

Ces figures ont été décrites lors de l'exposé de l'état de la technique.

Ainsi qu'énoncé plus haut, les profils connus du type à creux central enterré permettent, par un choix de leurs paramètres géométriques effectué selon les critères de la présente invention, d'obtenir des surfaces effectives de mode bien plus élevées que celles obtenues d'une part avec les profils classiques du type à échelon, trapèze ou triangle, et d'autre part avec les profils à creux central enterré tels que mis en oeuvre dans l'art antérieur. La présente invention permet ainsi d'optimiser le choix des paramètres géométriques de ces profils pour satisfaire les exigences requises en termes de surface effective de mode, de dispersion chromatique, d'atténuation et de pertes par courbure.

On expose ci-après deux exemples de mise en oeuvre possibles de la présente invention, donnant les valeurs des paramètres géométriques définis plus haut et vérifiant les relations de l'invention, ainsi que la surface effective de mode, la dispersion chromatique à 1,55 µm, la longueur d'onde de coupure, l'atténuation et les pertes par courbure obtenues avec les profils possédant ces caractéristiques.

On rappelle au préalable que toutes les caractéristiques géométriques des profils selon l'invention sont fonction de deux paramètres de base : le rayon total a du coeur de la fibre et la différence d'indice $\Delta n$ entre l'indice maximal du coeur et l'indice de la gaine optique.

Ces paramètres fondamentaux peuvent être déterminés de manière classique afin de répondre aux exigences essentielles pour les fibres optiques dans le cadre de la présente invention, ces exigences étant les suivantes :

- dispersion chromatique sensiblement nulle, c'est-à-dire en pratique inférieure à 1 ps/(nm.km) au voisinage de 1,55 µm,
- longueur d'onde de coupure $\lambda_c$ telle que : 1,4 µm < $\lambda_c$ < 1,55 µm, pour que la transmission soit monomode aux longueurs d'onde souhaitées et pour diminuer les pertes par courbure,
- atténuation voisine de 0,2 dB/km.

On rappelle brièvement comment choisir les paramètres a et $\Delta n$ pour satisfaire les critères précédents dans le cas d'un profil du type à trapèze et anneau central, le raisonnement s'appliquant de manière similaire au profil du type à creux central enterré.

De manière connue, la dispersion chromatique C peut être mise sous la forme d'une fonction de la longueur d'onde $\lambda$ comme suit :

$$C(\lambda) = M(\lambda) - \frac{\Delta n}{c\lambda} V \frac{d^2\ (VB)}{dV^2} + \varepsilon(\lambda) \qquad (1),$$

où :

- $M(\lambda)$ est un terme connu caractérisant la dispersion chromatique de la silice pure à la longueur d'onde $\lambda$ ($M(\lambda)$ vaut environ 22 ps/(nm.km) à 1,55 µm),
- $V \frac{d^2\ (VB)}{dV^2}$ est un terme caractérisant la dispersion du guide, V étant la fréquence normalisée et B l'indice effectif normalisé (on rappelle que l'indice effectif est l'indice effectivement "vu" par l'onde lumineuse se propageant dans le coeur), fonction de V,
- c est la célérité de la lumière dans le vide,
- $\varepsilon(\lambda)$ est un terme négligeable.

Etant donné que l'on cherche à avoir une longueur d'onde de coupure $\lambda_c$ telle que le guidage soit monomode entre 1,4 et 1,55 µm, on peut en déduire un intervalle délimitant les variations de la fréquence normalisée V, et donc un intervalle correspondant pour B. On peut donc déduire $\Delta n$ de l'équation (1), puis a de l'équation (2) donnant la fréquence

normalisée :

$$V = \frac{2\pi}{\lambda} a \sqrt{2n_s\Delta n} \qquad (2),$$

$n_s$ étant l'indice de la gaine optique et $\lambda$ la longueur d'onde de fonctionnement.

De manière générale, pour les fibres optiques ayant un profil du type à creux central enterré, le rayon de coeur a peut être choisi, pour vérifier les conditions précédentes, entre 2,5 et 4 µm, et la différence d'indice $\Delta n$ entre $12.10^{-3}$ et $20.10^{-3}$.

D'autre part, pour le profil du type à creux central enterré, y peut être choisi de manière quelconque entre 0 et 1 au sens strict.

**Exemple 1**

Dans cet exemple, la fibre optique est du type à creux central enterré. Les valeurs des différents paramètres caractéristiques de la fibre sont les suivantes :

- a = 3,07 µm,
- $\Delta n = 15,6.10^{-3}$,
- y = 0,56,
- h = - 0,55.

Avec une telle fibre, la dispersion chromatique est de 0,7 ps/(nm.km) à 1558 nm, la longueur d'onde de coupure de 1,485 µm et l'atténuation de l'ordre de 0.21 dB/km. Les pertes par courbure sont inférieures à $5.10^{-7}$ dB/m.

La surface effective de mode est de 71,9 µm$^2$.

**Exemple 2**

Dans cet exemple, la fibre optique est du type à creux central enterré. Les valeurs des différents paramètres caractéristiques de la fibre sont les suivantes :

- a = 3,3 µm,
- $\Delta n = 14,7.10^{-3}$,
- y = 0,606,
- h = - 0,599.

Avec une telle fibre, la dispersion chromatique est de 0,7 ps/(nm.km) à 1558 nm, la longueur d'onde de coupure de 1,485 µm et l'atténuation de l'ordre de 0.21 dB/km. Les pertes par courbure sont inférieures à $10^{-3}$ dB/m.

La surface effective de mode est de 89,8 µm$^2$.

Bien évidemment, la présente invention n'est pas limitée aux modes de mise en oeuvre particuliers qui viennent d'être décrits.

Notamment, lorsque l'on évoque des formes géométriques précises comme des trapèzes, des triangles, des rectangles, etc..., il est bien évident qu'en pratique, les profils obtenus peuvent différer plus ou moins sensiblement des profils théoriques, et il a été montré dans la littérature que ces différences, si elles restent contrôlées, ne changent pas les propriétés attendues pour les fibres optiques concernées. Pour plus de détails. on peut se reporter au brevet US-4 406 518 de la société Hitachi.

Ainsi, pour les fibres selon l'invention, il est important que les paramètres géométriques (distances à l'axe de la fibre, différences d'indices) vérifient sensiblement les relations de l'invention, mais il n'est pas nécessaire que la forme réelle des courbes soit exactement conforme à la forme géométrique théorique pour le profil considéré.

Enfin, on pourra remplacer tout moyen par un moyen équivalent sans sortir du cadre de l'invention.

**Revendications**

1. Fibre optique monomode à dispersion chromatique sensiblement nulle au voisinage de 1,55 µm, comprenant un coeur optique comportant :

   - une partie centrale d'indice variable avec la distance à l'axe de ladite fibre optique entre un indice minimal

$n_s+h\Delta n$, avec $-1 < h < 0$ et $\Delta n$ strictement positif, et un indice maximal $n_s$,

- une couche entourant ladite partie centrale, d'indice variable avec la distance à l'axe de ladite fibre entre $n_s$ et $n_s+\Delta n$,

et une gaine optique entourant ladite couche et ayant un indice sensiblement égal à $n_s$, ledit profil étant défini par les paramètres géométriques suivants :

- a : rayon total du coeur mesuré au niveau de ladite couche,
- y : rapport entre le rayon de ladite partie centrale et a, avec $0 < y < 1$, ladite fibre étant caractérisée en ce que a et $\Delta n$ sont déterminés de sorte que la dispersion chromatique de ladite fibre est sensiblement nulle à 1,55 µm et la longueur d'onde de coupure $\lambda_c$ de ladite fibre soit telle que : 1,4 µm < $\lambda_c$ < 1,55 µm, y est choisi quelconque entre 0 et 1 et h est choisi de manière à vérifier les relations suivantes :

1°) $h_1(y) \leq h_2 \leq h_2(y)$ avec :

$$\begin{cases} h_1(y) = -6{,}56 - 14{,}96y - 8{,}71y^2 \text{ et,} \\ h_2(y) = -6{,}2 - 16{,}76y - 11{,}61y^2 \end{cases}$$

2°)$-2{,}33y + 0{,}6 < h < -0{,}2$.

**2.** Fibre optique selon la revendication 1 caractérisée en ce que a est compris entre 2,5 et 4 µm et $\Delta n$ est compris entre $12.10^{-3}$ et $20.10^{-3}$.

FIG.1

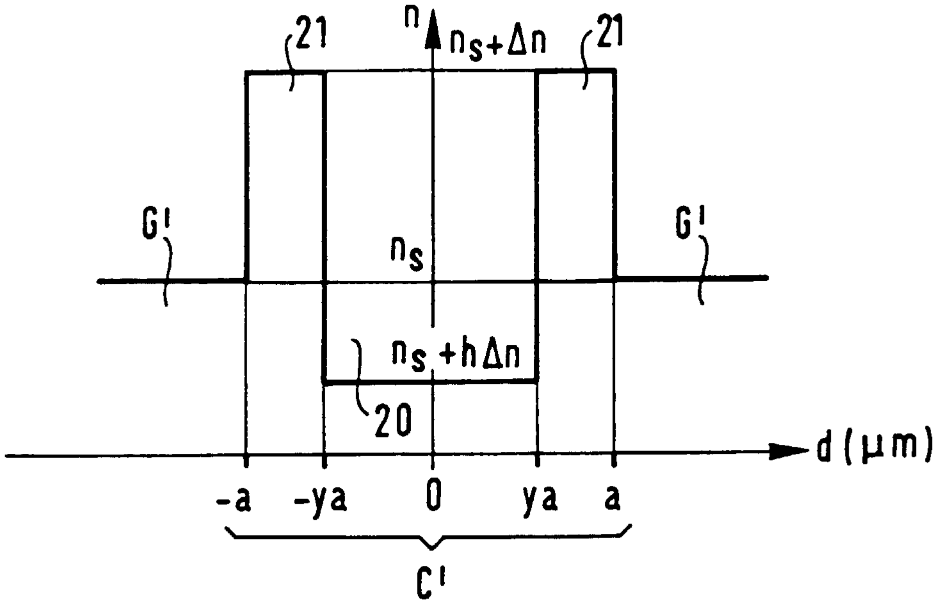
n
$n_s+\Delta n$
21
21
G'
G'
$n_s$
$n_s+h\Delta n$
20
d (µm)
-a
-ya
0
ya
a
C'

FIG.2

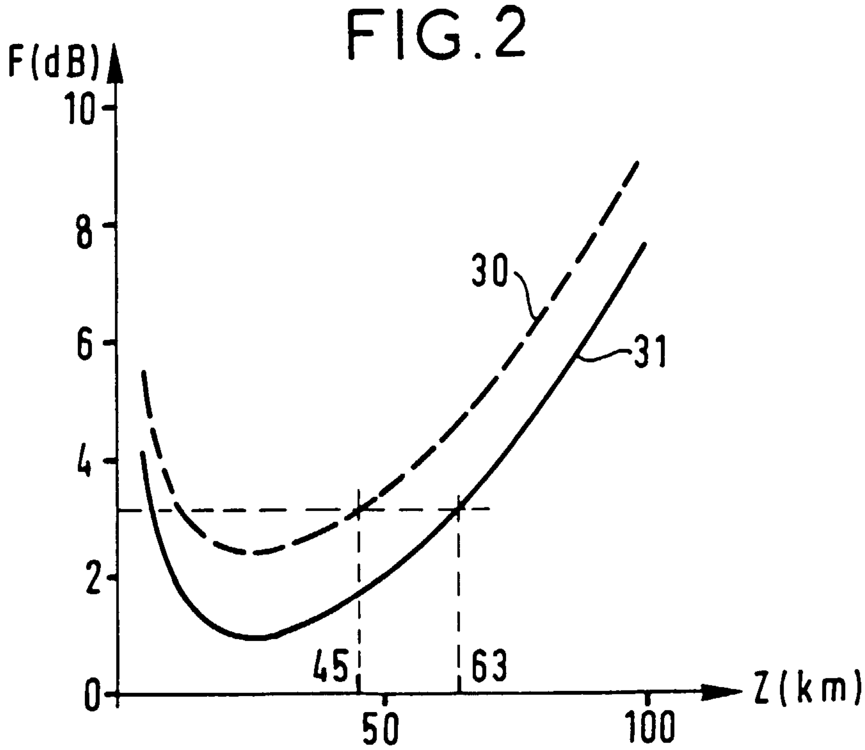
F(dB)
10
8
6
4
2
0
30
31
45
63
50
100
Z(km)